# EUROPEAN PATENT SPECIFICATION

(11) **EP 2 356 193 B1**
(45) Date of publication and mention of the grant of the patent: **25.12.2013**
(21) Application number: 09821133.7
(22) Date of filing: 13.10.2009
(51) Int. Cl.: C09K 8/14, C09K 8/24, C09K 8/12, C09K 8/20

(54) **CHROME FREE WATER-BASED WELLBORE FLUID**
CHROMFREIE WASSERBASISBOHRLOCHFLÜSSIGKEIT
FLUIDE DE PUITS DE FORAGE AQUEUX EXEMPT DE CHROME

(30) Priority: 13.10.2008 US 104766 P
(43) Date of publication of application: 17.08.2011
(73) Proprietor: M-I L.L.C., Houston, TX 77072 (US); M-I Drilling Fluids UK Limited, Aberdeen, Scotland AB10 1UD (GB)
(72) Inventor: TEHRANI, Ahmadi, Banchory AB31 5ZN (GB); GERRARD, Donna, Aberdeen AB12 3AD (GB); YOUNG, Steven, Cypress TX 77429 (US); FERNANDEZ, Jorge, Houston TX 77040 (US)
(74) Representative: Gill, Stephen Charles
(86) International application number: PCT/US2009/060529
(87) International publication number: WO 2010/045248

(56) References cited:
- WO-A1-2008/001112
- US-A- 4 502 965
- US-A- 4 741 843
- US-A1- 2005 096 232
- US-A1- 2005 096 232
- US-A1- 2006 019 834
- US-A1- 2006 019 834
- US-A1- 2006 116 296
- US-A1- 2007 129 258

## Description

### Field of the Invention

Embodiments disclosed herein relate generally to water-based wellbore fluids and methods of using such fluids. In particular, embodiments disclosed herein relate generally to water-based fluids being chrome-free.

### Background Art

During the drilling of a wellbore, various fluids are typically used in the well for a variety of functions. The fluids may be circulated through a drill pipe and drill bit into the wellbore, and then may subsequently flow upward through wellbore to the surface. During this circulation, the drilling fluid may act to remove drill cuttings from the bottom of the hole to the surface, to suspend cuttings and weighting material when circulation is interrupted, to control subsurface pressures, to maintain the integrity of the wellbore until the well section is cased and cemented, to isolate the fluids from the formation by providing sufficient hydrostatic pressure to prevent the ingress of formation fluids into the wellbore, to cool and lubricate the drill string and bit, and/or to maximize penetration rate.

In most rotary drilling procedures the drilling fluid takes the form of a "mud," i.e., a liquid having solids suspended therein. The solids function to impart desired rheological properties to the drilling fluid and also to increase the density thereof in order to provide a suitable hydrostatic pressure at the bottom of the well. The drilling mud may be either a water-based or an oil-based mud.

The selection of the type of drilling fluid to be used in a drilling application involves a careful balance of both the good and bad characteristics of the drilling fluids in the particular application and the type of well to be drilled. The primary benefits of selecting an anqueous-based drilling fluid, also known as a water-based mud, include: lower costs, lower environmental impact, and improved health and safety characteristics, as well as other benefits that should be known to one of skill in the art.

Under high temperature/high pressure (HTHP) drilling conditions, control of fluid properties becomes a major challenge. Fluid loss control is an issue in high temperature environments due to degradation of many polymers at high temperatures and high pressures. Chrome-lignosulfonates are a common component in high-temperature water-based fluids, acting as effective dispersants and conferring excellent fluid loss control and rheological properties. However, the presence of chrome in a fluid increases the potential for gel formation, which can create significant issues in HTHP applications.

US4741843 A discloses fluid loss additives and drilling fluids containing the same. US2006/019834 discloses a water-based drilling fluid composition which includes water and at least one rheology modifier and/or fluid control agent. US2005/096232 discloses high performance water-based drilling fluids and a method for use. US4502965 discloses terpolymers for use as high temperature fluid loss additive and rheology stabilizer for high pressure, high temperature oil well drilling fluids. WO 2008/001112 A1 discloses swellable elastomers and associated methods of reducing fluid loss in a subterranean formation.

There exists a continuing need for alternative aqueous-based wellbore fluids that provide good fluid loss properties while maintaining a desired rheological profile.

### SUMMARY OF INVENTION

In one aspect, embodiments disclosed herein relate to a method for maintaining the rheology and reducing the fluids loss of a chrome-free, aqueous-based wellbore fluids under high temperature-high pressure conditions. The method may comprise formulating the chrome-free, aqueous wellbore fluid with an aqueous base fluid, at least one chrome-free viscosifier, at least one chrome-free fluid loss control additive, at least one chrome-free dispersant; and circulating the chrome-free aqueous-based wellbore fluid in a wellbore at temperatures exceeding 148.9°C (300°F). The chrome-free, aqueous based wellbore, fluid preferably has a thermal plastic viscosity less than 70mPa.s (70cP) and a fluid loss less than 20 mL. The at least one chrome-free viscosifier may be a natural or synthetic clay selected from the group consisting of sepiolite, hectorite, attapulgite, montmorillonite, and combinations thereof. The at least one chrome-free fluid loss control additive may be a polyacrylamide selected from the group consisting of a terpolymer of acrylamide, sulfonated monomer, and vinylpyrrolidone; a copolymer of acrylamido sulfonic acid and acrylamide; and combinations thereof. The at least one fluid loss control additive may also comprise a vinyl-based copolymer. The at least one chrome-free dispersant may comprise a lignosulfonate selected from the group consisting of resonated sulfonated lignite, oxidized lignite, and combinations thereof. The chrome-free aqueous-based wellbore fluid may further comprise at least one chrome-free high-temperature rheology stabilizers selected from the group consisting of copolymers based on polyacrylate and polyacrylamide; copolymers of vinylamide and vinylsulfonate; and combinations thereof. The chrome-free aqueous-based wellbore, fluid may further comprise a copolymer of starch and latex.

In another aspect, embodiments disclosed herein relate to methods for decreasing the gelation of a chrome-free aqueous based wellbore fluid in HTHP environments, where the method comprises formulating the chrome-free aqueous-based wellbore fluid with an aqueous base fluid, at least one chrome-free viscosifier, at least one chrome-free fluid loss control additive, at least one chrome-free dispersant; and circulating the chrome-free aqueous-based wellbore fluid in a wellbore at a temperature of at least 148.9°C (300°F). The chrome-free, aqueous based wellbore fluid preferably has a static shear strength less than 10 kg/m² (200 pounds per 100 square feet (^{lb}/100 ft²)) and a 10-minute gel strength less than 2 kg/m² (40 pounds per 100 square feet (^{lb}/100 ft²)). The at least one chrome-free viscosifier may be a natural or synthetic clay selected from the group consisting of sepiolite, hectorite, attapulgite, montmorillonite, and combinations thereof. The at least one chrome-free fluid loss control additive may be a polyacrylamide selected from the group consisting of a terpolymer of acrylamide, sulfonated monomer, and vinylpyrrolidone; a copolymer of acrylamido sulfonic acid and acrylamide; and combinations thereof. The at least one fluid loss control additive may also comprise a vinyl-based copolymer. The at least one chrome-free dispersant may comprise a lignosulfonate selected from the group consisting of resonated sulfonated lignite, oxidized lignite, and combinations thereof. The chrome-free aqueous-based wellbore fluid may further comprise at least one chrome-free high-temperature rheology stabilizer selected from the group consisting of copolymers based on polyacrylate and polyacrylamide; copolymers of vinylamide and vinylsulfonate; and combinations thereof. The chrome-free aqueous-based wellbore fluid may further comprise a copolymer of starch and latex.

In yet another aspect, embodiments disclosed relate to wellbore fluids comprising an aqueous base fluid, at least one chrome-free viscosifier, at least one chrome-free fluid loss control additive, at least one chrome-free dispersant; and circulating the chrome-free aqueous-based wellbore fluid in a wellbore at a temperature of at least 148.9°C (300°F). The chrome-free, aqueous based wellbore fluid preferably has a thermal plastic viscosity less than 70mPa.s (70cP) and a fluid loss less than 20 mL. The chrome-free, aqueous based wellbore fluid also preferably has a static shear strength less than 10 kg/m² (200 pounds per 100 square feel (^{lb}/100 ft²)), and a 10-minute gel strength less than 2 kg/m² 40 pounds per 100 square feet (^{lb}/100 ft²)). The at least one chrome-free viscosifier may be a natural or synthetic clay selected from the group consisting of sepiolite, hectorite, attapulgite, montmorillonite, and combinations thereof. The at least one chrome-free fluid loss control additive may be a polyacrylamide selected from the group consisting of a terpolymer of acrylamide, sulfonated monomer, and vinylpyrrolidone; a copolymer of acrylamido sulfonic acid and acrylamide; and combinations thereof. The at least one fluid loss control additive may also comprise a vinyl-based copolymer. The at least one chrome-free dispersant may comprise a lignosulfonate selected from the group consisting of resonated sulfonated lignite, oxidized lignite, and combinations thereof. The chrome-free aqueous-based wellbore fluid may further comprise at least one chrome-free high-temperature rheology stabilizer selected from the group consisting of copolymer based on polyacrylate and polyacrylamide; copolymers of vinylamide and vinylsulfonate; and combinations thereof. The chrome-free aqueous-based wellbore fluid may further comprise a copolymer of starch and latex..

Other aspect and advantages of the invention will be apparent from the following description and the appended claim.

### DETAILED DESCRIPTION

Embodiments disclosed herein are directed to methods of minimizing fluid loss while maintaining the rheology of aqueous-based fluids in high temperature and high pressure environments. Other embodiments of the disclosure relate to methods of decreasing the gelation of aqueous-based fluids in high temperature and high pressure environments. In the following description, numerous details are set forth to provide an understanding of the present disclosure.

In one aspect, embodiments disclosed herein relate to a method of stabilizing the rheology and fluid loss of chrome-free aqueous-based wellbore fluids. The method may include formulating a chrome-free aqueous-based wellbore fluid, and circulating the chrome-free aqueous-based wellbore fluid in a wellbore in a high temperature/high pressure (HTHP) environment. As used herein, the term "chrome-free" refers to a fluid having substantially no chromium-based components present in the wellbore fluid. "High temperature" refers to environments exceeding 148.9°C (300°F) and "high pressure" refers to environments exceeding 34 MPa (5000 psi).

The chrome-free aqueous-based wellbore fluid may comprise a chrome-free aqueous base fluid, chrome-free clay, at least one chrome-free fluid loss control additive, at least one chrome-free rheology control additive, and a chrome-free dispersant. The components of the aqueous-based wellbore fluid should be chrome-free to comply with emerging environmental restrictions and minimize gelation of the fluid in HTHP environments.

The components of the aqueous-based wellbore fluids of the present disclosure should be selected to minimize gel formation. Polyvalent metals are generally present in the highest valence state. Without being bound to theory, it is believed that gelation may occur when the polyvalent metal is reduced to its lower polyvalent valence state, and interacts with crosslinkable polymers. Exemplary polyvalent metals include chromium, which can be found in many wellbore fluid additives currently incorporated into HTHP wellbore fluids. Further discussion of the influence of polyvalent metals on gel formation can he found in US Patent No. 4,040,484. Therefore, reduction of gelation of HTHP aqueous-based wellbore fluids may be achieved by incorporating components free of polyvalent metals, and more preferably, free of chromium-containing compounds.

**Chrome-Free Fluid Loss Control Additive**

Fluid loss control additives may be incorporated into the chrome-free aqueous-based wellbore fluids of the present invention to minimize fluid loss and gelation in HTHP conditions. For reasons explained above, the fluid loss control additive should be chrome-free to minimize gel formation.

Fluid loss control additives need to be stable to high temperature. More particularly, fluid loss control additives useful for embodiments disclosed herein should display excellent fluid loss control properties under HTHP conditions, while not adversely impacting the rheology of the wellbore fluid. Fluid loss control additives that may be useful for achieving these desires include polyacrylamides.

As used herein, the term "polyacrylamide" refers to polymers containing an acrylamide monomer unit combined with one or more other monomers. The monomer composition of the polyacrylamide plays an important role in the development and functionality of the fluid loss control additive. For example, sulfonated monomers provide better tolerance to divalent anions, resulting in a thermally stable fluid loss control additive.

Possible monomers that can be combined with acrylamide to form polyacrylamide include sulfonated monomers. Examples of sulfonated monomers that may be useful in embodiments herein include vinyl sulfonate, styrene sulfonic acid, 2-acrylamide-2-methyl-propane sulfonic acid, and combinations thereof. Other possible monomer units that can be combined with an acrylamide monomer to form polyacrylamide copolymers include vinyl pyrrolidone. The degree of crosslinking plays in important role in copolymer solubility, which is related to the ability to control fluid loss. A high degree of crosslinking will result in a polymer with rigid structures, and reduced hydration in water-based fluids. A low degree of crosslinking will result in a polymer that may cause too much rheology, and have limited tolerances to contamination and shear.

Monomers suitable for embodiments herein may be combined to form copolymers or terpolymers. Examples of polyacrylamide copolymers that may be useful in embodiments herein include copolymers of 2-acrylamide-2-methyl-propane sulfonic acid and acrylamide.. Examples of polyacrylamide terpolymers that may be useful in embodiments herein include terpolymers of vinyl pyrrolidone, sulfonated monomer units, and acrylamide. While several examples of monomer units and polyacrylamides have been presented, combining two or more of the exemplary polyacrylamides may also be useful in embodiments described herein. In other words, the fluid loss control additive may be selected from the group consisting of copolymers of 2-acrylamide-2-methyl-propane sulfonic acid and acrylamide; terpolymers of vinyl pyrrolidone, sulfonated monomer units, and acrylamide; and combinations thereof.

**Chrome-Free Dispersant**

Dispersants may be incorporated into the chrome-free aqueous-based wellbore fluids of the present invention to help maintain the fluid rheology in HTHP conditions. For reasons explained above, the dispersant should be chrome-free to minimize gel formation.

Chrome-free dispersants useful in embodiments disclosed herein may include lignins and modified lignins. Lignins are complex, natural, amorphous polymers related to cellulose that provide rigidity and together with cellulose form the woody cell walls of plants and the cementing material between them. Lignins are formed from the oxidative coupling of, primarily, 4-hydroxyphenylpropanoids. An example of the structure of a small piece of lignin polymer is presented below:

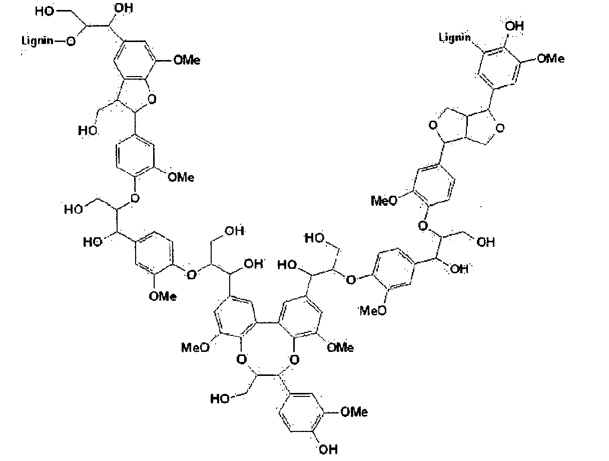

Lignins may also be modified by various reactants to deliver specific properties. Methods of modifying lignins are well known in the art, and illustrative methods of modifying lignins can be found in literature and patents. Exemplary US patents include US Patent Numbers 2,854,444, 3,600,308, and 3,546,199. Modified lignins useful in the embodiments of this invention include lignosulfonates.

**Chrome-Free Viscosifier**

Viscosifiers may be incorporated into the chrome-free aqueous-based wellbore fluids of the present invention to build the viscosity of the wellbore fluid. For reasons explained above, the viscosifier should be chrome-free to minimize gel formation.

Chrome-free viscosifiers useful to the embodiments disclosed herein include natural and synthetic chrome-free clays selected from the group consisting of sepiolite, hectorite, attapulgite, montmorillonite, and combinations thereof. Sepiolite is a complex magnesium silicate clay mineral. Hectorite is a silicate clays mineral. Synthetic versions of hectorite include laponite clay. Attapulgite is a magnesium aluminum phyllosilicate clay. Montmorillonite is a phyllosilicate mineral, and includes bentonite clay.

**Chrome-Free High-Temperature Rheology Stabilizer**

High-temperature rheology stabilizers may be incorporated into the chrome-free aqueous-based wellbore fluids of the present invention to help stabilize the rheology in HTHP conditions. For reasons explained above, the high-temperature rheology stabilizers should be chrome-free to comply with environmental regulations and to minimize gel formation.

Chrome-free high-temperature rheology stabilizers useful in embodiments disclosed herein include polycarboxylate thinners, and more particularly, copolymers based on polyacrylate and polyacrylamide. Exemplary copolymers based on polyacrylate and polyacrylamide include EMI-1048, commercially available from M-I L.L.C. (Houston, Texas, U.S.A.).

Further chrome-free high-temperature rheology stabilizers useful in embodiments disclosed herein include copolymers of vinylamide and vinylsulfonate, such as EMI-927, commercially available from M-I L.L.C. (Houston, Texas, U.S.A.).

**Sealant Additive**

Sealant additives may be incorporated into the chrome-free aqueous-based wellbore fluids of the present invention to provide filtration reduction in HTHP conditions. For reasons explained above, the fluid loss control additive should be chrome-free to minimize gel formation.

Sealant additives useful in embodiments disclosed herein include copolymers of a natural polymer monomer unit and latex monomer. As used herein, "natural polymer monomer unit" refer to any polymer produced by living organisms. As used herein, "latex monomer" may refers to any synthetic or natural rubber.

Examples of natural polymer monomer units useful in embodiments herein include polysaccharides, lignins, lignitic materials, and tannins. Natural polymer monomer units useful in embodiments herein may be also be derivatized. "Derivatized natural polymers" refers to natural polymers that have been modified chemically. Such derivatized natural polymers may include hydroxyalkyl starches and gums, starch and gum esters, cross-linked starches and gums, hypochlorite oxidized starches and gums, starch and gum phosphate monoesters, cationic starches and gums, starch and gum xanthates, and dialdehyde starches and gums. These derivatized natural polymers may be manufactured using any means known in the art. Examples of derivatized starches include carboxymethyl starches, hydroxyethyl starches, hydroxypropyl starches, hydroxybutyl starches, carboxymethylhydroxyethyl starches, carboxymethylhydroxypropyl starches, carboxymethylhydroxybutyl starches, polyacrylamide starches, and other starch copolymers.

A variety of well known latex materials can be used as latex monomer units in embodiments of the copolymer of the present disclosure. For example, natural rubber (cis-1,4-polyisoprene) and most of its modified types may be used. Synthetic polymers of various types may also be used, including polymers or copolymers of vinyl acetate, vinyl esters of fatty acids, esters of acrylic and methacrylic acids, acrylonitrile, styrene, vinyl chloride, vinylidene chloride, tetrafluoroethylene and other mono-olefinically unsaturated monomers. Some examples of latex monomers which may be useful in embodiments of the present disclosure include styrene/butadiene, cis-1,4-polybutadiene and copolymers thereof, high styrene resin, butyl, ethylenelpropylene, neoprene, nitrile, cis-1,4-polyisoprcne, silicone chlorosulfonated polyethylene, epichlorohydrin, fluorocarbon, fluorosilicone, polyurethane, polyacrylic and polysulfide.

Wellbore fluids including the natural polymer/latex copolymers of the present disclosure may provide advantageous scaling characteristics in HTHP environments, thereby providing additional fluid loss reduction when used in conjunction with the fluid loss control additives of the present disclosure. Exemplary natural polymer/latex copolymer useful in embodiments of the present disclosure include POROSEAL™ (M-I LLC, Houston, Texas). While exemplary natural polymer/latex copolymers have been provided, any natural polymer/latex copolymer may be useful in embodiments herein. Additional details regarding the natural polymer-latex copolymers of the present disclosure can be found in PCT Application No. PCT/US09/042715.

Aqueous Base Fluid

The wellbore fluids of the present disclosure may have an aqueous base fluid. The aqueous fluid may included at least one of fresh water, tap water, deionized sea water, mixtures of water and water-soluble organic compounds, gels and mixtures thereof. For example, the aqueous fluid may be formulated with mixtures of desire salts in fresh water. Such salts may include, but are not limited to alkali metal chlorides, hydroxides, or carboxylates, for example.

The wellbore fluids described above may be adapted to provide improved wellbore fluids under conditions of high temperature and pressure, such as those encountered in deep wells. Further, one skilled in the art would recognize that in addition to the components already provided, other additives may be included in the wellbore fluids disclosed herein, for instance, weighting agents, lubricants, shale inhibitors, corrosion inhibitors, oxygen scavengers, hydrogen sulfide scavengers, biocides, surfactants, interfacial tension reducers, pH buffers, and mutual solvents.

The chrome-free wellbore fluids of the present disclosure provide a method of reducing fluid loss while maintaining the desired rheology. One skilled in the art will recognize that obtaining desirable fluid loss performance while maintaining the fluid rheology is a challenging task, particularly in 1HTHP environments. Careful design of the wellbore fluid is critical to achieve optimal balance of fluid loss control and rheology. Advantageously, the methods of the present invention incorporate novel wellbore fluids in HTHP conditions that are capable of achieving an improved balance between fluid loss control and rheology. Polymeric materials that give effective fluid loss control also increase fluid rheology, and particularly increase the high shear rate rheology characterized by plastic viscosity or PV. The chrome-free, aqueous-based wellbore, fluid preferably has a plastic viscosity of less than 70 mPa.s (70cP) after heat aging the chrome-free aqueous based wellbore fluid for 16 hours at 232.2°C (450°F) according to API procedure 13B-1, and a HTHP fluid loss less than 20 mL when measured at 176.7°C (350°F) and 3.4 MPa (500 psi), according to API RP 13B. The method may comprise formulating a chrome-free, aqueous-based wellbore fluid comprising an aqueous base fluid, a chrome-free viscosifier, and chrome-free fluid loss control additive, and a chrome-free dispersant. The aqueous-based wellbore fluid may further comprise rheology stabilizers, temperature stabilizers, and sealant additives. The method may further comprise circulating this chrome-free, aqueous based wellbore, fluid in a wellbore in HTHP conditions.

The chrome-free fluid loss control additive is preferably polyacrylamide, and more preferably selected from the group consisting of a copolymer or acrylamide sulfonic acid and acrylamide, a terpolymer of acrylamide, sulfonated monomer, and vinylpyrrolidone, and combinations thereof. The fluid loss control additive may also be a vinyl-based copolymer. The chrome-free dispersant preferably comprises a lignosulfonate, wherein the lignosulfonate is selected from the group consisting of a resonated sulfonated lignite, oxidized lignite, and combinations thereof. The sealant additive is preferably a natural polymer/latex copolymer.

The chrome-free wellbore fluids of the present disclosure provide a method of preventing gel formation of the chrome-free wellbore fluids. HTHP aqueous-based fluids may develop high shear strengths during static periods. As a result, when the drilling fluids has been stationary in the well for an extended period, remobilizing the fluid will require excessively high pumping power and can result in fracturing of the formation. Therefore, after heat-aging the chrome-free, aqueous based wellbore fluid for 12 hours at 232.2°C (450°F), the wellbore, fluid preferably has a static shear strength less than 10 kg/m² (200 pounds per 100 square feet (^{lb}/100 ft²))) when measured according to Expotech USA, Method #166, and a 10-minute gel less than 2 kg/m² (40 pounds per 100 square feet (lb/₁₀₀ ft²)), when measured according to API RP 13B. More preferably, the wellbore fluid has a static shear strength less than 7.5 kg/m² (150 pounds per 100 square feet (^{lb}/₁₀₀ ft²)) and a 10-minute gel less than 1.5 kg/m² (30 per 100 square feet (^{lb}/₁₀₀ ft²)). The method may comprise formulating a chrome-free, aqueous-based wellbore, fluid comprising an aqueous base fluid, a chrome-free viscosifier, and chrome-free fluid loss control additive, and a chrome-free dispersant. The aqueous-based wellbore fluid may further comprise high-temperature rheology stabilizers, and sealant additives. The method may further comprise circulating this chrome-free, aqueous-based wellbore fluid in a wellbore in HTHP conditions.

The chrome-free fluid loss control additive is preferably polyacrylamide, and more preferably selected from the group consisting of a copolymer of acrylamido sulfonic acid and acrylamide, a terpolymer of acrylamide, sulfonated monomer, and vinylpyrrolidone, and combinations thereof. The fluid loss control additive may also be a vinyl-based copolymer. The chrome-free dispersant preferably comprises a lignosulfonate, wherein the lignosulfonate is selected from the group consisting of a resonated sulfonated lignite, oxidized lignite, and combinations thereof. The sealant additive is preferably a natural polymer/latex copolymer.

**Examples**

Various chrome-free water-based fluids were formulated. Specifically, in formulating the fluids, the chrome-free fluid loss additive blend was modified substituting the additive type, and then optimizing the blend with a quantity of base fluid. The remaining components detailed in the examples below were then added. The thermal stability and filtration control of the water-based drilling fluids were examined by subjecting the fluids to high temperatures over a period of time. The fluid were mixed in 1-lab barrel quantities (350 mL) using a Hamilton Beach mixer, and aged in a roller oven for 16 hours at 232.2°C (450°F) Rheology was determined, both before and after thermal aging, at 48.9°C (120°F) on a Fann-35 Viscometer. The HTHP fluid loss of the aged fluids was measured at 176.7°C (350°F), 3.4MPa (500psi).

"600," "300," "200," "100," "6," and "3" are the speeds of rotation of the Fann Model 35 Viscometer, measured according to API RP 13B-1. The viscosity and gel strengths are measured in pounds per 100 square feet (^{lb}/₁₀₀ ft²) where 1 pound per 100 square feet = 0.05 Kg/m².

"PV" is plastic viscosity, measured in centipoises (cP) units, measured according to API RP 13B-1 1cP = 1MPa.

"YP" is yield point, measured in pounds per 100 square feet (^{lb}/₁₀₀ ft²), measured according to API RP 13B-1 where 1 pound per 100 square feet = 0.05 Kg/m².

"Gels" is a measure of the suspending characteristics, or the thixotropic properties of a drilling fluid, measured in pounds per 100 square feet (^{lb}/₁₀₀ ft²), measure according to API RP 13B-1 where 1 pound per 100 square feet = 0.05 Kg/m².

"HTIIP" is the term used for high temperature, high pressure fluid loss, measured in milliliters (mL) according to API bulletin RP 13B-1, 1990.

"Static Shear Strength" is the term used for the evaluation of a static-aged fluid sample left at high temperature for several hours, measured in pounds per 100 square feet (^{lb}/₁₀₀ ft²) where 1 pound per 100 square feet = 0.05 Kg/m² measured according to Expotech USA, Method #166.

**Example 1**

Chrome-free, aqueous-based wellbore fluid A was evaluated for fluid loss control and rheology stability. Wellbore fluid A was formulated as indicated in Table 1, optimized through careful selection of the components for the system, at proper concentration levels of the components. Water was mixed with DUROGEL, a chrome-free sepiolite clay commercially available from M-I L.L.C. Houston, Texas, U.S.A., at the stated concentrations. A chrome-free polyacrylamide, such as Driscal D, commercially available from Drilling Specialties (The Woodlands, Texas, U.S.A.), was included as a chrome-free fluid loss control additive in Fluid A at the indicated concentration. Optimization was achieved with using EMI-1048 as the temperature stabilizer at the indicated concentration. EMI-1048 is a polycarboxylate based temperature stabiliser, commercially available from M-I L.L.C. (Houston, Texas, U.S.A)..The concentration of the temperature stabilizer may be in the range of about 1 ppb to about 5 ppb, and more preferably about 2 ppb to about 4 ppb. RESINEX and TANNATHIN, both chrome-free dispersants commercially available from M-I L.L.C. (Houston, Texas, U.S.A.), were added to assist with fluid loss and rheology control.

**Table 1: Fluid formulation of a copolymer of acrylamido sulfonic acid and acrylamide**

| **Product/ lb/bbl** | **Fluid A** |
|---|---|
| Water | 206.80 |
| Soda Ash | 0.25 |
| DUROGEL | 2.0 |
| RESINEX | 6.0 |
| Caustic Soda | 0.50 |
| POLYPAC UL | 2.0 |
| HMP | 15.0 |
| Driscal D | 2.25 |
| Barite | 500.8 |
| EMI-1048 | 3.0 |
| TANNATHIN | 7.0 |
| Lime | 1.0 |

Table 2 summarizes the test results for Fluid A.

**Table 2: Fluid properties for Fluid A**

| **AHR @ 232.2°C (450°F)** | **Unit** | **Fluid A** |
|---|---|---|
| 600 | kg/m² (lb/100 ft²) | 7.5 (150) |
| 300 | " | 4.2 (84) |
| 200 | " | 3 (60) |
| 100 | " | 1.8 (36) |
| 6 | " | 0.3 (6) |
| 3 | " | 0.2 (4) |
| PV | mPa.s (cP) | 66 (66) |
| YP | Kg/m² (lb/100 ft²) | 0.9 (18) |
| pH | - | 10.94 |
| Gels (10 second/10 minute/30 minute) | Kg/m²(lb/100 ft²) | 0.3/1.1/1.65 (6/22/33) |
| HTHP @ 176.7°C (350°F) | MI | 16 |
| Static Shear Strength | Kg/m² lb/100ft² | 7.25 (145) |

As indicated above, optimized Fluid A yielded fluid loss less than 20 mL, with a plastic viscosity less than 70mPa.s (70cP). Further, Fluid A provided a reduced gelation, with static shear strength less than 200 ^{lb}/₁₀₀ ft², and a 10-minute gel of less than 2.25kg/m² (45 ^{lb}/₁₀₀ ft²).

**Examples 2**

Fluid B was formulated as indicated in Table 3. EMI-1045 is a chrome-free polyacrylamide fluid loss control additive commercially available from M-I L.L.C. (Houston, Texas, U.S.A.). Dristemp is a synthetic polymer commercially available from Drilling Specialties (The Woodlands, Texas, U.S.A.). The test results are given in tale4.

**Table 3: Formulations using EMI-1045**

| **Product/ppb** | **Fluid** |
|---|---|
| Water | 206.8 |
| Soda Ash | 0.25 |
| DUROGEL | 2.0 |
| Caustic soda | 0.5 |
| EMI-1045 | 3.0 |
| RESINEX | 8.0 |
| POLYPACUL | 1.0 |
| HMP | 15.0 |
| Dristemp | 0.5 |
| Barite | 500.8 |
| PTS 200 | 2.0 |
| TANNATHIN | 10.0 |
| SAFESCAV NA | 0.5 |
| Lime | 1.0 |

**Table 4: Properties of fluids of Table 3**

| **AHR @ 232.2°C (450°F)** | **Fluid B** |
|---|---|
| 600 | 7.5 (150) |
| 300 | 4.2 (84) |
| 200 | 3 (60) |
| 100 | 1.8 (36) |
| 6 | 0.3 (6) |
| 3 | 0.2 (4) |
| PV | 66 (66) |
| YP | 0.9 (18) |
| pH | 10.94 |
| Gels (10 second/10 minute/30 minute) | 0.3/1.1/1.65 (6/22/33) |
| HTHP @ 176.7°C (350°F) | 16 |
| Static Shear Strength | 145 |

As indicated in Table 4, optimized Fluid B yielded fluid loss less than 20 mL, with a plastic viscosity less than 70mPa.s (70cP). Further, Fluid B provided reduced gelation, with static shear strength less than 10Kg/m² (200 ^{lb}/₁₀₀ ft², and a 10-minute gel of less than 2.25kg/m² (45 ^{lb}/₁₀₀ ft²).

Advantageously, embodiments of the present disclosure for an aqueous-based fluid free of chrome conventionally necessary in formulating high temperature water-based fluids. By using a water-based fluid formulated without chrome, many issues associated with the use of conventional HTHP water-based fluids may be overcome.

## Claims

1. A method for maintaining the rheology and reducing the fluid loss of a chrome-free, aqueous-based wellbore fluid under high temperature-high pressure conditions, comprising:
formulating the chrome-free, aqueous-based wellbore fluid comprising:
an aqueous base fluid;
at least one chrome-free viscosifier;
at least one chrome-free fluid loss control additive; and
at least one chrome-free dispersant; wherein the circulated chrome-free aqueous-based wellbore fluid has a thermal plastic viscosity less than 70mPa.s (70 cP) and a fluid loss less than 20 mL and
circulating the chrome-free, aqueous-based wellbore fluid in a wellbore at temperatures exceeding 148.9 °C (300°F); the method being **characterized in that**:
the chrome-free, aqueous-based wellbore fluid further comprises a copolymer of starch and latex.

2. The method of claim 1, wherein the at least one chrome-free viscosifier is a natural or synthetic clay selected from the group consisting of sepiolite, hectorite, attapulgite, montmorillonite, and combinations thereof.

3. The method of claim 1, wherein the at least one chrome-free fluid loss control additive comprises a polyacrylamide, optionally the polyacrylamide being selected from the group consisting of:
a terpolymer of acrylamide, sulfonated monomer, and vinylpyrrolidone,
a copolymer of acrylamido sulfonic acid and acrylamide,
and combinations thereof.

4. The method of claim 1, wherein the at least one chrome-free dispersant comprises a lignosulfonate, optionally the lignosulfonate being selected from the group consisting of resinated sulfonated lignite, oxidized lignite, and combinations thereof.

5. The method of claim 1, wherein the chrome-free, aqueous-based wellbore fluid further comprises at least one chrome-free rheology stabilizer for environments exceeding 148.9°C (300°F), optionally the at least one chrome-free rheology stabilizer being selected from the group consisting of copolymers based on polyacrylate and polyacrylamide; copolymers of vinylamide and vinylsulfonate; and combinations thereof.

6. The method of claim 1, wherein the at least one fluid loss control additive comprises a vinyl-based copolymer.

## Patentansprüche

1. Verfahren zur Bewahrung der Rheologie und Reduktion des Flüssigkeitsverlusts einer chromfreien, wasserbasierten Bohrlochflüssigkeit unter Hochdruck- und Hochtemperatur-Bedingungen, das Folgendes umfasst:
das Formulieren der chromfreien, wasserbasierten Flüssigkeit, die Folgendes umfasst:
eine wässrige Basisflüssigkeit;
zumindest einen chromfreien Viskositätsverstärker;
zumindest ein chromfreies Flüssigkeitsverlustkontrolladditiv; und
zumindest ein chromfreies Dispersionsmittel; worin die zirkulierte, chromfreie, wasserbasierte Bohrlochflüssigkeit eine thermoplastische Viskosität von weniger als 70 mPa.s (70 cP) und einen Flüssigkeitsverlust von weniger als 20 ml aufweist, und
das Zirkulieren der chromfreien, wasserbasierten Bohrlochflüssigkeit in einem Bohrloch bei Temperaturen von über 148,9 °C (300 °F); wobei das Verfahren **dadurch gekennzeichnet ist, dass**
die chromfreie, wasserbasierte Bohrlochflüssigkeit weiters ein Copolymer aus Stärke und Latex umfasst.

2. Verfahren nach Anspruch 1, worin der zumindest eine chromfreie Viskositätsverstärker ein aus der aus Sepiolit, Hectorit, Attapulgit, Montmorillonit und Kombinationen davon bestehenden Gruppe ausgewählter natürlicher oder synthetischer Ton ist.

3. Verfahren nach Anspruch 1, worin das zumindest eine chromfreie Flüssigkeitsverlustkontrolladditiv ein Polyacrylamid umfasst, wobei das Polyacrylamid vorzugsweise aus der aus einem Terpolymer aus Acrylamid, sulfoniertem Monomer und Vinylpyrrolidon, einem Copolymer aus Acrylamidosulfonsäure und Acrylamid und Kombinationen davon bestehenden Gruppe ausgewählt ist.

4. Verfahren nach Anspruch 1, worin das zumindest eine chromfreie Dispersionsmittel ein Lignosulfat umfasst, wobei das Lignosulfat gegebenenfalls aus der aus geharztem sulfoniertem Lignit, oxidiertem Lignit und Kombinationen davon bestehenden Gruppe ausgewählt ist.

5. Verfahren nach Anspruch 1, worin die chromfreie, wasserbasierte Bohrlochflüssigkeit weiters zumindest einen chromfreien Rheologiestabilisator für Umgebungen mit mehr als 148,9 °C (300 °F) umfasst, wobei gegebenenfalls der zumindest eine chromfreie Rheologiestabilisator aus der aus Copolymeren auf Basis von Polyacrylat und Polyacrylamid; Copolymeren aus Vinylamid und Vinylsulfonat; und Kombinationen davon bestehenden Gruppe ausgewählt ist.

6. Verfahren nach Anspruch 1, worin das zumindest eine chromfreie Flüssigkeitsverlustkontrolladditiv ein Copolymer auf Vinylbasis umfasst.

## Revendications

1. Procédé pour le maintien de la rhéologie et pour la réduction de la perte de fluide d'un fluide de puits de forage aqueux exempt de chrome sous des conditions de haute température - haute pression, comprenant :
formuler le fluide de puits de forage aqueux exempt de chrome comprenant :
un fluide à base aqueuse ;
au moins un agent conférant de la viscosité exempt de chrome ;
au moins un additif de commande de perte de fluide exempt de chrome ; et
au moins un dispersant exempt de chrome; où le fluide de puits de forage aqueux exempt de chrome circulé possède une viscosité thermoplastique inférieure à 70 mPa.s (70 cP) et une perte de fluide inférieure à 20 mL, et
faire circuler le fluide de puits de forage aqueux exempt de chrome dans un puits de forage à des températures dépassant 149.9 °V (300 °F) ; le procédé étant **caractérisé en ce que** :
le fluide de puits de forage aqueux exempt de chrome comprend en outre un copolymère d'amidon et de latex.

2. Procédé selon la revendication 1, dans lequel au moins un agent conférant de la viscosité, exempt de chrome, est une argile naturelle ou synthétique sélectionnée dans le groupe consistant en sépiolite, hectorite, attapulgite, montmorillonite et leurs combinaisons.

3. Procédé selon la revendication 1, dans lequel au moins un additif de contrôle de perte de fluide exempt de chrome comprend un polyarcylamide, en option le polyacrylamide étant sélectionné dans le groupe consistant en :
un terpolymère d'acrylamide, monomère sulfoné et vinylpyrrolidone,
un copolymère d'acide acrylamido sulfonique et acrylamide,
et leurs combinaisons.

4. Procédé selon la revendication 1, dans lequel au moins un dispersant exempt de chrome précité comprend un lignosulfonate, en option le lignosulfonate étant sélectionné dans le groupe consistant en lignite sulfonée résinée, lignite oxydée et leurs combinaisons.

5. Procédé selon la revendication 1, dans lequel le fluide de puits de forage aqueux exempt de chrome comprend en outre au moins un stabilisateur de rhéologie exempt de chrome pour des environnements dépassant 148.9 °C (300 °F), en option au moins un stabilisant de rhéologie exempt de chrome précité étant sélectionné dans le groupe consistant en copolymères basés sur le polyacrylate et le polyacrylamide; copolymères de vinylamide et de vinylsulfonate ; et leurs combinaisons.

6. Procédé selon la revendication 1, dans lequel au moins un additif de contrôle de perte de fluide comprend un copolymère à base de vinyle.
